# EUROPÄISCHE PATENTSCHRIFT

(11) **EP 4 650 260 B1**
(45) Veröffentlichungstag und Bekanntmachung des Hinweises auf die Patenterteilung: **11.11.2026**
(21) Anmeldenummer: 24175443.1
(22) Anmeldetag: 13.05.2024
(51) Int. Cl.: B62J 9/23, B62J 9/27, F16M 11/04

(54) **HALTEVORRICHTUNG FÜR DIE ANBRINGUNG EINES MOBILEN ENDGERÄTS AN EINEM ZWEIRAD**
HOLDING DEVICE FOR ATTACHING A MOBILE TERMINAL TO A BICYCLE
DISPOSITIF DE RETENUE POUR FIXER UN TERMINAL MOBILE SUR UN DEUX-ROUES

(43) Veröffentlichungstag der Anmeldung: 19.11.2025
(73) Patentinhaber: SKS metaplast Scheffer-Klute GmbH, 59846 Sundern (DE)
(72) Erfinder: Grabski, Karsten, 59469 Ense (DE)
(74) Vertreter: Fritz Patent- und Rechtsanwälte PartmbB

(56) Entgegenhaltungen:
- CN-U- 216 401 617
- DE-A1- 102017 128 167
- JP-B2- 6 010 726
- US-B2- 10 694 012
- US-B2- 10 953 943

## Beschreibung

Die vorliegende Erfindung betrifft eine Haltevorrichtung für die Anbringung eines mobilen Endgeräts an einem Zweirad gemäß dem Oberbegriff des Anspruchs 1.

Mobile Endgeräte, wie beispielsweise Smartphones oder Tablet-Computer, werden häufig an Fahrrädern montiert, beispielsweise um auf ihnen Navigationsanwendungen zu nutzen.

Eine Haltevorrichtung der vorgenannten Art ist aus der DE 10 2017 128 167 A1 bekannt. Die darin beschriebene Haltevorrichtung umfasst ein Befestigungsteil, ein Aufnahmeteil und ein Verriegelungselement. Das Befestigungsteil weist ein sich axial erstreckendes Element und mindestens eine quer vorstehende Nase auf. Das Aufnahmeteil weist eine Aussparung zur Aufnahme des Elements und der Nase auf, wenn sich das Aufnahmeteil in einer Aufnahme-/Freigabeposition befindet, sowie mindestens eine Lippe für das Zusammenwirken mit der mindestens einen Nase, um das Befestigungsteil zu halten, wenn das Aufnahmeteil relativ zum Befestigungsteil verdreht wird. Das Verriegelungselement ist zwischen dem Befestigungsteil und dem Aufnahmeteil betätigbar und zwischen einer entriegelten Position und einer Sicherungsposition bewegbar, um das Aufnahmeteil wahlweise in einer Vielzahl von winklig versetzten Verriegelungspositionen relativ zum Befestigungsteil zu halten.

Eine weitere Haltevorrichtung ist aus der JP 6 010726 B2 bekannt. Darin wird die Bereitstellung einer elektronischen Vorrichtung offenbart, die so ausgelegt ist, dass die Beweglichkeit eines Schalters zufriedenstellend aufrechterhalten und gleichzeitig dessen Bedienbarkeit verbessert wird. Dazu kann ein Unterteil eines Gehäuses relativ zu einer auf einer Halterung montierten Drehbasis gedreht werden. Ein Drehbasisdeckel ist an der Drehbasis im Gehäuse befestigt. Ein Tastschalter ist an der Unterseite einer im Gehäuse angeordneten Leiterplatte angebracht. Ein Bedienelement des Tastschalters ragt nach unten. Das Bedienelement wird zwischen Verriegelungsteilen des Drehsockeldeckels gehalten. Wenn das Gehäuse gedreht und gekippt wird, dreht sich das Bedienelement mit dem Gehäuse mit, während sich der Deckel der Drehbasis nicht dreht. Das Bedienelement wird durch die Verriegelungsteile seitlich vorgespannt, um den Tastschalter ein- beziehungsweise auszuschalten.

Eine weitere Haltevorrichtung ist aus der US10953943B2 bekannt. Die darin beschriebene Haltevorrichtung umfasst eine erste Befestigungsvorrichtung zur Befestigung des mobilen Endgeräts an der Haltevorrichtung und eine zweite Befestigungsvorrichtung zur Befestigung der Haltevorrichtung an dem Fahrrad. Jede der Befestigungsvorrichtungen weist einen Adapter auf, wobei die beiden Adapter für die Anbringung des mobilen Endgeräts an dem Fahrrad miteinander verbindbar sind. Die Verbindung erfolgt über eine Bajonettverbindung, die durch ein Verdrehen der Adapter relativ zueinander die Überführung der Adapter aus einer ersten in eine zweite Drehposition ermöglichen kann. Dabei befindet sich die Haltevorrichtung in der ersten Drehposition der Adapter in einem Freigabezustand, in dem die Adapter durch eine lineare Bewegung voneinander lösbar sind. Weiterhin befindet sich die Haltevorrichtung in der zweiten Drehposition der Adapter in einem Verriegelungszustand, in dem die Adapter nicht durch eine lineare Bewegung voneinander lösbar sind.

**In** der zweiten Drehposition greift ein Vorsprung an einem der beiden Adapter in ein Loch an dem anderen der beiden Adapter ein, so dass die Adapter erst nach dem händischen Herausbewegen des Vorsprungs aus dem Loch relativ zueinander von der zweiten in die erste Drehposition verdreht werden können, um die mit dem Smartphone verbundene Befestigungsvorrichtung abzuziehen. Dies erweist sich als vergleichsweise umständlich.

Das der vorliegenden Erfindung zugrundeliegende Problem ist die Schaffung einer Haltevorrichtung der eingangs genannten Art, die eine einfachere Montage und/oder Demontage eines mit der Haltevorrichtung verbundenen mobilen Endgeräts an einem Zweirad ermöglicht.

Dies wird erfindungsgemäß durch eine Haltevorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass der zweite Adapter eine Adapterplatte aufweist, an der ein von der Adapterplatte in der axialen Richtung wegragendes Verbindungteil angeordnet ist, der eine Hinterschneidung aufweist.

Insbesondere befinden sich die Adapter in der mindestens einen dritten Drehposition in einem Zustand, in dem sie nicht durch eine lineare Bewegung gelöst werden können. Die mindestens eine dritte Drehposition dient somit der Sicherung des mobilen Endgeräts, wenn der Benutzer das Endgerät beispielsweise durch eine ungeplante Bewegung aus der zweiten Drehposition herausgedreht hat. **In** der dann erreichten dritten Drehposition lösen sich die Adapter nicht voneinander, so dass das Endgerät nicht irrtümlich freigegeben wird.

Es kann vorgesehen sein, dass die Haltevorrichtung dazu eingerichtet ist, dass der erste und der zweite Adapter durch Drehung relativ zueinander in mindestens zwei zweite Drehpositionen überführt werden können, die einen Winkel von 90° miteinander einschließen, und dass die Haltevorrichtung dazu eingerichtet ist, dass der erste Adapter relativ zu dem zweiten Adapter sowohl im Uhrzeigersinn als auch im Gegenuhrzeigersinn von der mindestens einen ersten Drehposition in mindestens eine zweite Drehposition überführt werden kann und/oder dass der erste Adapter relativ zu dem zweiten Adapter sowohl im Uhrzeigersinn als auch im Gegenuhrzeigersinn von einer zweiten Drehposition in mindestens eine erste Drehposition überführt werden kann. Durch diese Gestaltung wird erreicht, dass durch Verdrehen des ersten Adapters relativ zu dem zweiten Adapter im Uhrzeigersinn das, insbesondere als Smartphone ausgeführte, mobile Endgerät in eine erste Orientierung überführt werden kann und dass durch Verdrehen des ersten Adapters relativ zu dem zweiten Adapter im Gegenuhrzeigersinn das, insbesondere als Smartphone ausgeführte, mobile Endgerät in eine zweite Orientierung überführt werden kann, die insbesondere senkrecht zu der ersten Orientierung ist.

Dabei kann die Haltevorrichtung dazu eingerichtet sein, lediglich durch Verdrehen der Adapter relativ zueinander um die axiale Richtung von der zweiten in der ersten Drehposition von der Verriegelungsposition in die Freigabeposition überführt zu werden, ohne dass eine zusätzliche Verriegelung händisch gelöst werden muss. Diese Maßnahme führt zu einer wesentlich einfacheren Bedienung der Haltevorrichtung.

Es kann vorgesehen sein, dass die Haltevorrichtung dazu eingerichtet ist, dass für die Verbindung der Adapter miteinander der zweite Adapter in einer zu der Drehachse parallelen axialen Richtung zumindest abschnittsweise in den ersten Adapter eingebracht wird und in dem zumindest teilweise in den ersten Adapter eingebrachten Zustand durch Drehung um die Drehachse von der mindestens einen ersten Drehposition in die mindestens eine zweite Drehposition relativ zu dem ersten Adapter überführt wird, wobei in dem Freigabezustand die Adapter in der axialen Richtung relativ zueinander bewegbar sind und wobei in dem Verriegelungszustand die Adapter nicht in der axialen Richtung relativ zueinander bewegbar sind.

Es besteht die Möglichkeit, dass die Haltevorrichtung dazu eingerichtet ist, dass der erste und der zweite Adapter durch Drehung relativ zueinander in mehrere erste Drehpositionen und in mehrere zweite Drehpositionen überführt werden können, wobei eine jede der ersten Drehpositionen zwischen zwei zweiten Drehpositionen und eine jede der zweiten Drehpositionen zwischen zwei ersten Drehposition angeordnet sind, wobei sich die Haltevorrichtung in jeder der ersten Drehpositionen der Adapter in einem Freigabezustand befindet und in jeder der zweiten Drehposition der Adapter in einem Verriegelungszustand befindet. Dabei kann die Haltevorrichtung vier erste Drehpositionen und vier zweite Drehpositionen aufweisen, wobei jeweils der Drehwinkelabstand zwischen zwei benachbarten ersten Drehpositionen 90° beträgt und wobei jeweils der Drehwinkelabstand zwischen zwei benachbarten zweiten Drehpositionen 90° beträgt. Beispielsweise kann der Drehwinkelabstand zwischen der mindestens einen ersten Drehposition und der mindestens einen zweiten Drehposition, insbesondere einer der benachbarten zweiten Drehpositionen, 45° betragen. Durch das Vorsehen mehrerer erster Drehpositionen und mehrerer zweiter Drehpositionen wird es noch einfacher, das anzubringende mobile Endgerät in die gewünschte Position oder Orientierung zu überführen.

Es kann vorgesehen sein, dass in der mindestens einen ersten Drehposition und/oder in der mindestens einen zweiten Drehposition Teile der ersten und/oder der zweiten Befestigungsvorrichtung so miteinander verrasten, dass der erste Adapter nur gegen einen Widerstand aus der mindestens einen ersten Drehposition relativ zu dem zweiten Adapter in die mindestens eine zweite Drehposition überführbar ist oder dass der erste Adapter nur gegen einen Widerstand aus der mindestens einen zweiten Drehposition relativ zu dem zweiten Adapter in die mindestens eine erste Drehposition überführbar ist. Dadurch können die Adapter durch einfaches Verdrehen gegen einen anfänglichen Widerstand aus der zweiten in die erste Drehposition überführt und voneinander gelöst werden, was im Unterschied zum Stand der Technik wesentlich einfacher ist, bei dem die Überführung der Adapter aus der zweiten in die erste Drehposition nur nach dem händischen Herausbewegen des Vorsprungs aus dem Loch möglich ist.

Es besteht die Möglichkeit, dass die Haltevorrichtung acht dritte Drehpositionen aufweist, die jeweils zwischen einer ersten Drehposition und einer zweiten Drehposition angeordnet sind, insbesondere wobei der Drehwinkelabstand zwischen einer jeden der dritten Drehpositionen und der benachbarten ersten Drehposition 22,5° beträgt und/oder der Drehwinkelabstand zwischen einer jeden der dritten Drehpositionen und der benachbarten zweiten Drehposition 22,5° beträgt.

Es kann vorgesehen sein, dass der Verbindungsteil auf seiner von der Adapterplatte abgewandten Seite einen im Wesentlichen quadratischen Querschnitt aufweist. Es kann weiterhin vorgesehen sein, dass der erste Adapter eine Adapterplatte aufweist, an der ein von der Adapterplatte in der axialen Richtung wegragendes Verriegelungsteil angeordnet ist, der eine Öffnung für die Aufnahme des Verbindungteils des zweiten Adapters und eine Hinterschneidung aufweist, insbesondere wobei die Öffnung einen im Wesentlichen quadratischen Querschnitt aufweist. Dabei kann der Verbindungsteil auf seiner von der Adapterplatte abgewandten Seite einen Rand aufweisen, der in der zweiten Drehposition der Adapter in die Hinterschneidung des Verriegelungsteils eingreift. Diese Gestaltung ermöglicht eine einfache Montage und Demontage der Adapter aneinander.

Es besteht die Möglichkeit, dass die erste Befestigungsvorrichtung einen ringförmigen Mitnehmer aufweist, der dazu eingerichtet ist, so an dem ersten Adapter angebracht zu werden, dass er den Verriegelungsteil umgibt und relativ zu diesem um die Drehachse drehbar ist, insbesondere wobei der Mitnehmer mit dem ersten Adapter verclipst ist. Dabei kann der ringförmige Mitnehmer im an dem ersten Adapter angebrachten Zustand auf seiner von der Adapterplatte abgewandten Seite Mittel zur Verdrehsicherung, wie beispielsweise Nuten oder Rippen, aufweisen, die dazu eingerichtet sind, so mit an dem zweiten Adapter angebrachten Mitteln zur Verdrehsicherung, wie beispielsweise Rippen oder Nuten, zusammenzuwirken, dass sich bei einer Relativdrehung der beiden Adapter der Mitnehmer zusammen mit dem zweiten Adapter relativ zu dem ersten Adapter dreht. Weiterhin kann die erste Befestigungsvorrichtung einen Federring aufweisen, der dazu eingerichtet ist, so an dem ersten Adapter angebracht zu werden, dass er zwischen einem Teil des Mitnehmers und dem Verriegelungsteil angeordnet ist und relativ zu dem Verriegelungsteil drehfest ist. Dabei kann vorgesehen sein, dass der Mitnehmer auf einer dem Federring zugewandten Innenseite eine Mehrzahl von Rastausnehmungen aufweist und dass der Federring eine Mehrzahl von radial nach außen ragenden Vorsprüngen aufweist, wobei die Haltevorrichtung dazu eingerichtet ist, dass in der mindestens einen ersten und/oder in der mindestens einen zweiten und/oder in der mindestens einen dritten Drehposition der Adapter die Vorsprünge des Federrings in die Rastausnehmungen eingreifen, wobei für ein Überführen aus einer der Drehpositionen in eine andere der Drehpositionen die Vorsprünge gegen die Federkraft des Federrings aus den Rastausnehmungen herausbewegt werden.

Es besteht die Möglichkeit, dass die erste Befestigungsvorrichtung eine Smartphonehülle umfasst oder Teil einer Smartphonehülle ist oder an einer Smartphonehülle anbringbar ist. Alternativ kann die erste Befestigungsvorrichtung auch andere Mittel zur Befestigung an einem Smartphone aufweisen, wie beispielsweise mindestens eine Klammer oder mindestens einen Haltebügel oder dergleichen.

Es kann vorgesehen sein, dass die zweite Befestigungsvorrichtung eine Aheadkappe umfasst oder Teil einer Aheadkappe ist oder an einer Aheadkappe anbringbar ist. Alternativ kann die zweite Befestigungsvorrichtung auch andere Mittel zur Befestigung an einem Fahrrad aufweisen, wie beispielsweise mindestens eine Klammer oder mindestens einen Haltebügel oder mindestens eine Schlaufe oder dergleichen.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine perspektivische Explosionsansicht einer Ausführungsform einer erfindungsgemäßen Haltevorrichtung mit Teilen eines Zweirads;
- Fig. 2a: eine perspektivische Ansicht eines Teils einer ersten Befestigungsvorrichtung der Haltevorrichtung gemäß Fig. 1;
- Fig. 2b: eine Rückansicht der ersten Befestigungsvorrichtung gemäß Fig. 2a;
- Fig. 2c: eine teilweise geschnittene Vorderansicht der ersten Befestigungsvorrichtung gemäß Fig. 2a;
- Fig. 3a: eine Draufsicht auf einen Federring der ersten Befestigungsvorrichtung gemäß Fig. 2a;
- Fig. 3b: eine Seitenansicht des Federrings gemäß Fig. 3a;
- Fig. 3c: eine perspektivische Ansicht des Federrings gemäß Fig. 3a;
- Fig. 4a: eine perspektivische Ansicht eines Mitnehmers der ersten Befestigungsvorrichtung gemäß Fig. 2a;
- Fig. 4b: eine weitere perspektivische Ansicht des Mitnehmers gemäß Fig. 4a;
- Fig. 4c: eine Draufsicht auf den Mitnehmer gemäß Fig. 4a;
- Fig. 4d: eine Seitenansicht des Mitnehmers gemäß Fig. 4a;
- Fig. 5: eine Draufsicht auf den mit dem Federring gemäß Fig. 3a verbundenen Mitnehmer gemäß Fig. 4a;
- Fig. 6a: eine Draufsicht auf eine zweite Befestigungsvorrichtung der Haltevorrichtung gemäß Fig. 1;
- Fig. 6b: eine Seitenansicht der zweiten Befestigungsvorrichtung gemäß Fig. 6a;
- Fig. 6c: eine perspektivische Ansicht der zweiten Befestigungsvorrichtung gemäß Fig. 6a;

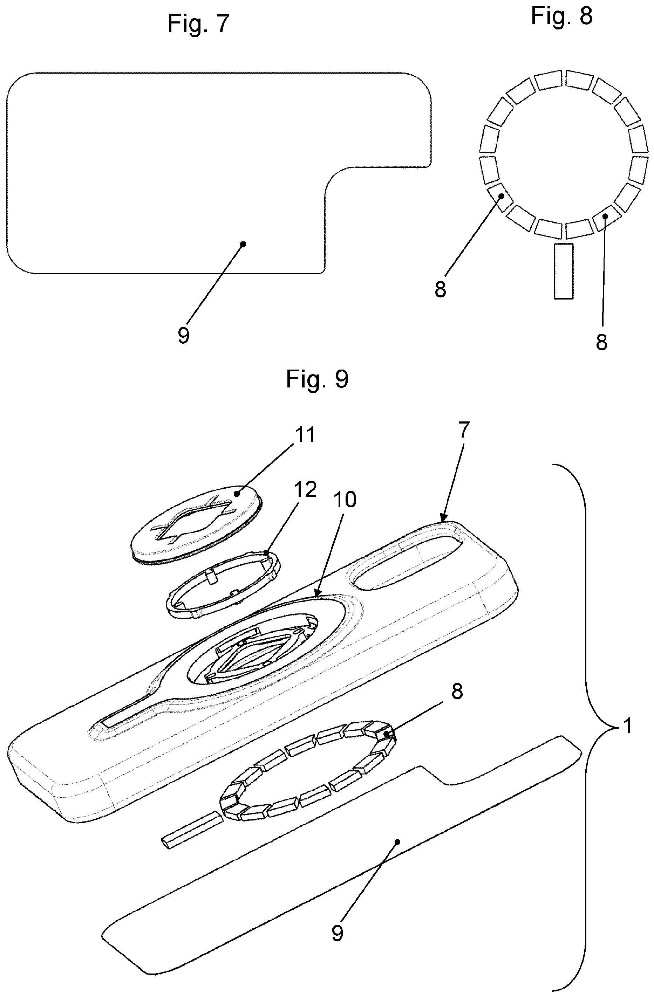

- Fig. 7: eine Draufsicht auf eine Folie der ersten Befestigungsvorrichtung gemäß Fig. 2a;
- Fig. 8: eine Draufsicht auf eine Mehrzahl von Magneten der ersten Befestigungsvorrichtung gemäß Fig. 2a;
- Fig. 9: eine Explosionsansicht der ersten Befestigungsvorrichtung gemäß Fig. 2a;
- Fig. 10a: eine Rückansicht der ersten Befestigungsvorrichtung gemäß Fig. 2a mit Mitnehmer und Federring;
- Fig. 10b: einen Schnitt gemäß den Pfeilen Xb - Xb in Fig. 10a;
- Fig. 11: eine perspektivische Ansicht der ersten Befestigungsvorrichtung gemäß Fig. 2a mit einem Smartphone und der zweiten Befestigungsvorrichtung gemäß Fig. 6a vor dem Zusammenbau;
- Fig. 12: eine weitere perspektivische Ansicht der ersten Befestigungsvorrichtung gemäß Fig. 2a mit einem Smartphone und der zweiten Befestigungsvorrichtung gemäß Fig. 6a vor dem Zusammenbau;
- Fig. 13: eine teilweise geschnittene Draufsicht auf die Haltevorrichtung gemäß Fig. 1 mit Teilen des Zweirads und einem Smartphone in einer ersten Drehstellung der Adapter der Haltevorrichtung;
- Fig. 14: eine teilweise geschnittene Draufsicht auf die Haltevorrichtung gemäß Fig. 1 mit Teilen des Zweirads und einem Smartphone in einer dritten Drehstellung der Adapter der Haltevorrichtung;
- Fig. 15: eine teilweise geschnittene Draufsicht auf die Haltevorrichtung gemäß Fig. 1 mit Teilen des Zweirads und einem Smartphone in einer zweiten Drehstellung der Adapter der Haltevorrichtung;
- Fig. 16: eine Draufsicht auf die Haltevorrichtung gemäß Fig. 1 mit Teilen des Zweirads und einem Smartphone in einer ersten Drehstellung der Adapter der Haltevorrichtung;
- Fig. 17: eine Draufsicht auf die Haltevorrichtung gemäß Fig. 1 mit Teilen des Zweirads und einem Smartphone in einer zweiten Drehstellung der Adapter der Haltevorrichtung, wobei sich in dieser zweiten Drehstellung die Längsrichtung des Smartphones in Zweiradlängsrichtung erstreckt;
- Fig. 18: eine Draufsicht auf die Haltevorrichtung gemäß Fig. 1 mit Teilen des Zweirads und einem Smartphone in einer zweiten Drehstellung der Adapter der Haltevorrichtung, wobei sich in dieser zweiten Drehstellung die Längsrichtung des Smartphones in Zweiradquerrichtung erstreckt.

Es ist nicht notwendig, dass eine erfindungsgemäße Haltevorrichtung alle nachfolgend beschriebenen Merkmale aufweist. Es ist auch möglich, dass eine erfindungsgemäße Haltevorrichtung nur einzelne Merkmale der nachfolgend beschriebenen Ausführungsbeispiele aufweist.

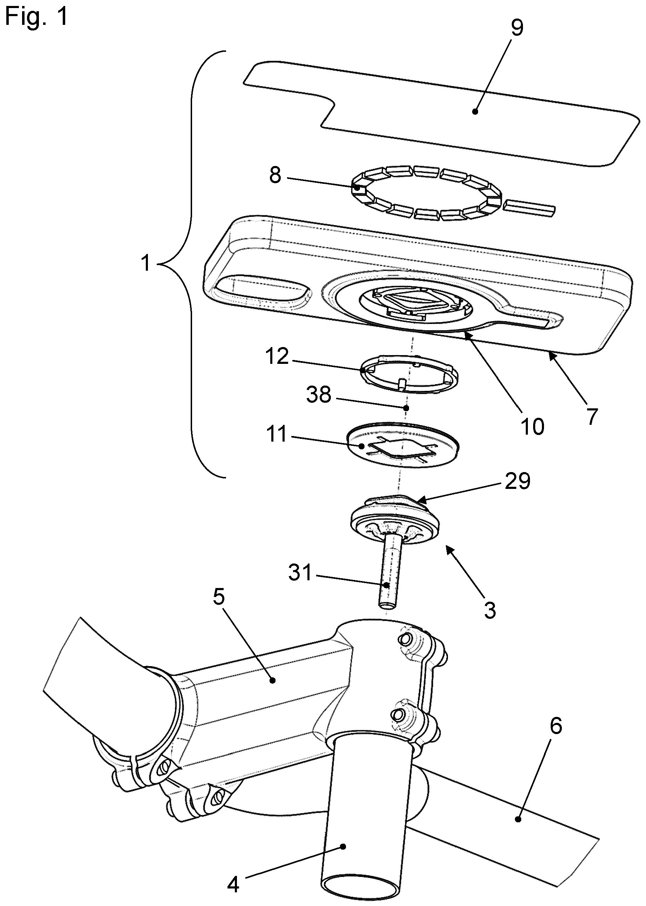

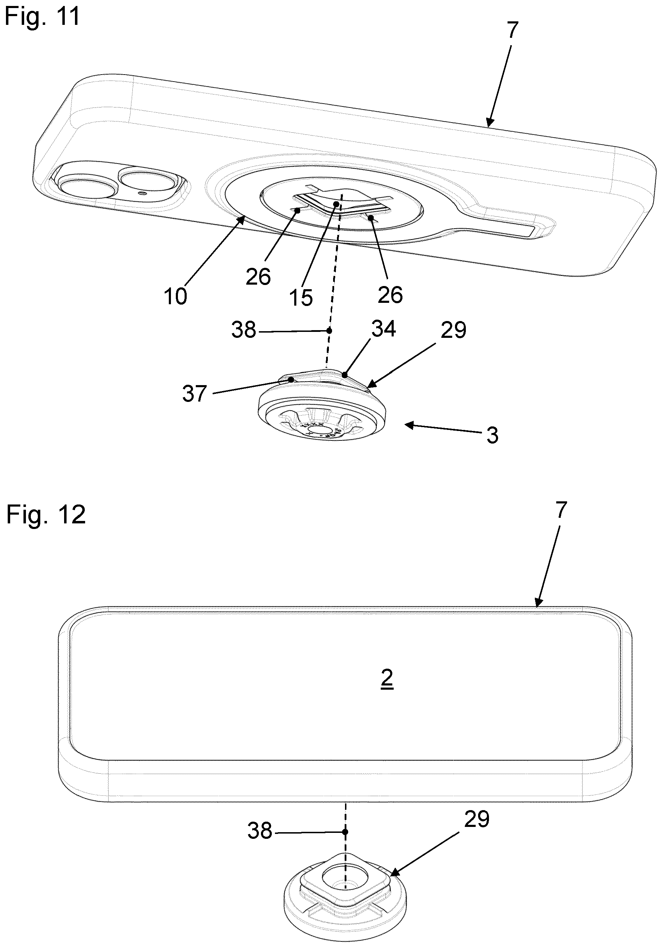

Die abgebildete Ausführungsform einer erfindungsgemäßen Haltevorrichtung umfasst eine erste Befestigungsvorrichtung 1 zur Befestigung des mobilen Endgeräts, insbesondere eines Smartphones 2 (siehe Fig. 11 und Fig. 12 sowie Fig. 16 bis Fig. 18), an der Haltevorrichtung und eine zweite Befestigungsvorrichtung 3 zur Befestigung der Haltevorrichtung an dem Fahrrad. Von dem Fahrrad sind in Fig. 1 der Gabelschaft 4, der Vorbau 5 und der Lenker 6 abgebildet.

Die erste Befestigungsvorrichtung 1 umfasst im abgebildeten Ausführungsbeispiel eine Smartphonehülle 7. Alternativ kann die erste Befestigungsvorrichtung 1 auch Teil einer Smartphonehülle 7 sein oder an einer Smartphonehülle 7 anbringbar sein. Alternativ kann die erste Befestigungsvorrichtung 1 auch andere Mittel zur Befestigung an einem Smartphone 2 aufweisen, wie beispielsweise mindestens eine Klammer oder mindestens einen Haltebügel oder dergleichen.

Die erste Befestigungsvorrichtung 1 umfasst weiterhin eine Mehrzahl von Magneten 8 und eine selbstklebende Folie 9, mit der die Magneten 8 an der Smartphonehülle 7 befestigt werden können. Die Magnete 8 dienen als Zentrierungshilfe beispielsweise bei einem induktiven Laden des Smartphones 2.

Die erste Befestigungsvorrichtung 1 umfasst weiterhin einen ersten Adapter 10, einen ringförmigen Mitnehmer 11 und einen Federring 12.

Der erste Adapter 10 ist im abgebildeten Ausführungsbeispiel in die Smartphonehülle 7 integriert. Es besteht jedoch durchaus die Möglichkeit, den ersten Adapter 10 an der Smartphonehülle 7 oder an einem anderen Mittel zur Befestigung des Smartphones 2, wie einer Klammer oder einem Haltebügel oder dergleichen, anzubringen.

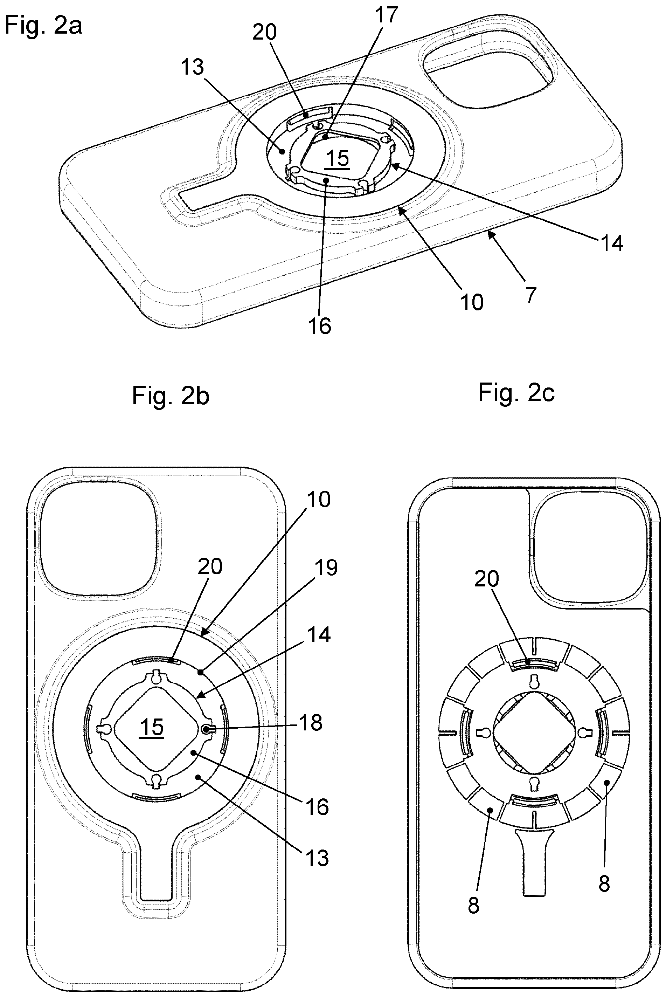

Der erste Adapter 10 weist eine Adapterplatte 13 auf, an der mittig ein von der Adapterplatte 13 wegragendes Verriegelungsteil 14 angeordnet ist, der einen im Wesentlichen quadratischen Umriss aufweist (siehe Fig. 2a bis Fig. 2c). Der Verriegelungsteil 14 weist eine Öffnung 15 auf, die insbesondere einen quadratischen Querschnitt mit leicht abgerundeten Ecken aufweist. Unter dem oberen Rand 16 des Verriegelungsteils 14 ist die Wand des Verriegelungsteils 14 gegenüber dem Rand 16 radial nach außen versetzt und/oder teilweise ausgeschnitten, so dass eine Hinterschneidung 17 entsteht.

An der Außenseite des Verriegelungsteils 14 sind vier Aussparungen 18 vorgesehen, die jeweils in einer der Ecken des im Wesentlichen quadratischen Umrisses angeordnet sind. Die Adapterplatte 13 ist von einer kreisförmig umlaufenden Wand 19 umgeben. Von der Wand 19 ragen vier Rastvorsprünge 20 radial nach innen, die jeweils einer der Ecken des im Wesentlichen quadratischen Umrisses des Verriegelungsteils 14 gegenüberliegen.

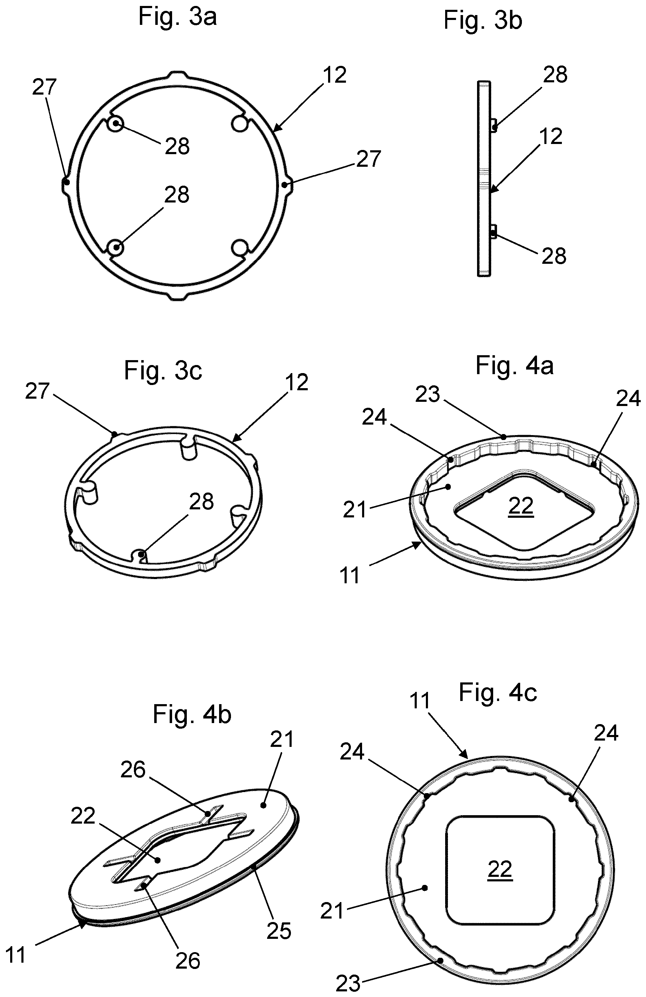

Der ringförmige Mitnehmer 11 weist eine Grundplatte 21 mit einer im Wesentlichen mittigen Öffnung 22 auf, die insbesondere einen quadratischen Querschnitt mit leicht abgerundeten Ecken aufweist (siehe die Fig. 4a bis Fig. 4d). Von der Grundplatte 21 ragt ein umlaufender Rand 23 weg, der auf seiner Innenseite eine Mehrzahl von Rastausnehmungen 24 aufweist. Im abgebildeten Ausführungsbeispiel sind sechzehn Rastausnehmungen 24 vorgesehen, die in gleichen Winkelabständen von jeweils 22,5° angeordnet sind.

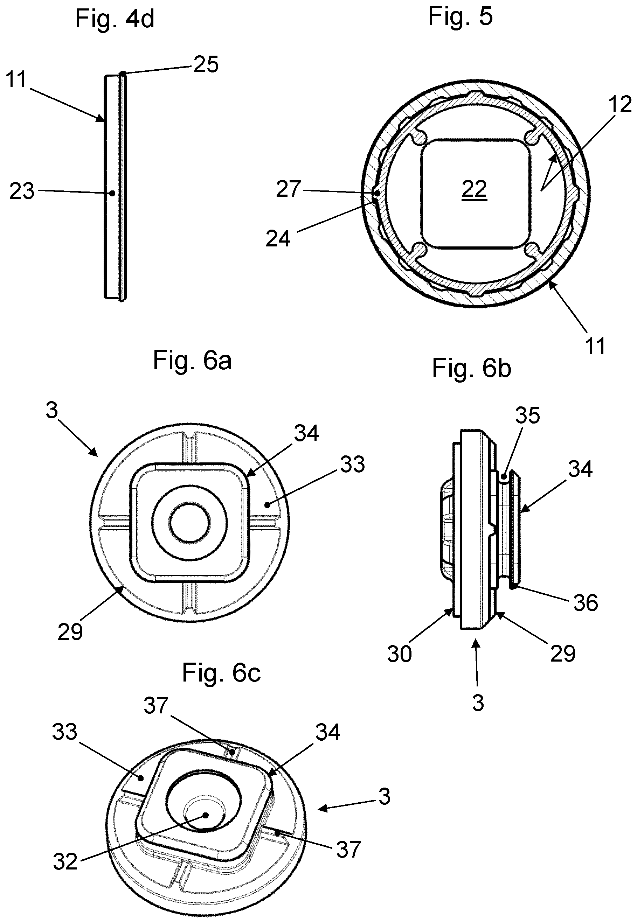

Der umlaufende Rand 23 weist an seinem von der Grundplatte 21 abgewandten Ende einen sich radial nach außen vorspringenden ringförmigen Endabschnitt 25 auf (siehe insbesondere Fig. 4d). Auf der von dem Rand 23 abgewandten Seite der Grundplatte 21 sind vier Nuten 26 vorgesehen, die sich insbesondere von den Mitten der Seiten des Quadrats der Öffnung 22 radial nach außen erstrecken (siehe insbesondere Fig. 4b).

Der Federring 12 besteht aus einem elastischen Material und weist eine Mehrzahl von radial nach außen ragenden, zueinander beabstandeten Vorsprüngen 27 auf. Im abgebildeten Ausführungsbeispiel sind vier Vorsprünge 27 vorgesehen, die in gleichen Winkelabständen von jeweils 90° beabstandet zueinander angeordnet sind.

Der Federring 12 weist weiterhin eine Mehrzahl von radial nach innen ragenden, voneinander beabstandeten Vorsprüngen 28 auf. Im abgebildeten Ausführungsbeispiel sind vier Vorsprünge 28 vorgesehen, die in gleichen Winkelabständen von jeweils 90° beabstandet zueinander angeordnet sind. Dabei sind die nach innen ragenden Vorsprünge 28 jeweils um 45° zu den nach außen ragenden Vorsprüngen 27 versetzt.

Fig. 5 verdeutlicht, dass der Federring 12 im zusammengebauten Zustand der ersten Befestigungsvorrichtung 1 in dem Mitnehmer 11 angeordnet ist. Dabei ragen die nach außen ragenden Vorsprünge 27 des Federrings 12 jeweils in eine der Rastausnehmungen 24 des Mitnehmers 11 hinein. Die zwischen den Vorsprüngen 27 angeordneten äußeren Randabschnitte des Federrings 12 liegen dabei an den nicht mit Rastausnehmungen 24 versehenen Abschnitten der Innenseite des umlaufendes Rands 23 des Mitnehmers an.

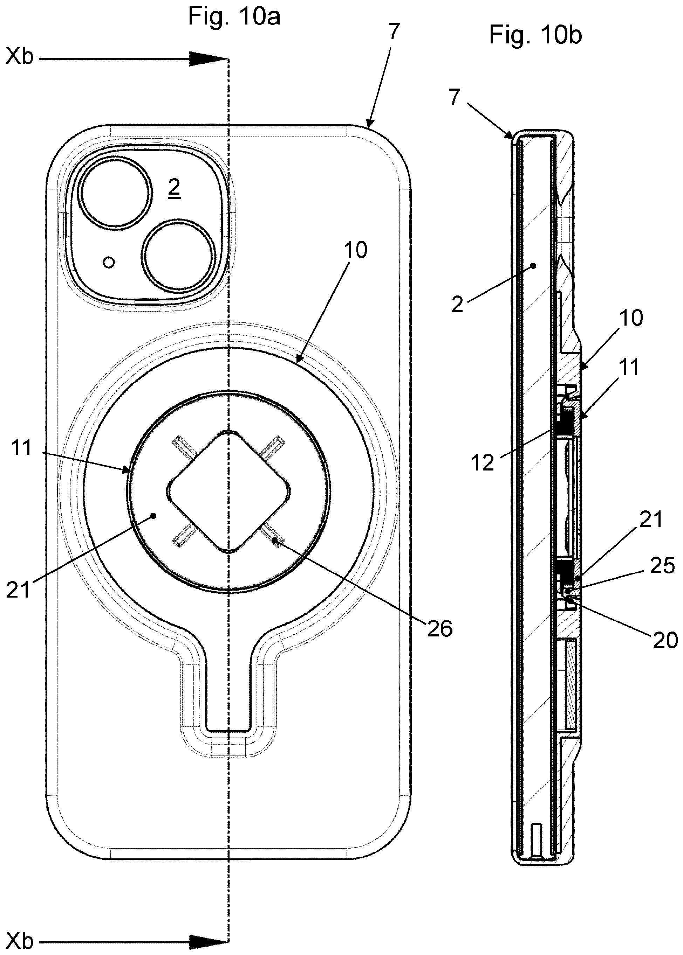

Fig. 10a und Fig. 10b zeigen, dass der ringförmige Mitnehmer 11 zusammen mit dem Federring 12 in dem ersten Adapter 10 angeordnet ist. Dabei ist die von dem umlaufenden Rand 23 abgewandte Seite der Grundplatte 21 des Mitnehmers 11 von der in Fig. 10a und Fig. 10b nicht sichtbaren Adapterplatte 13 des ersten Adapters 10 abgewandt und zeigt somit nach außen (siehe Fig. 10a).

Bei dem Einbringen des Mitnehmers 11 rastet der ringförmige Endabschnitt 25 des umlaufenden Rands 23 des Mitnehmers unter die vier Rastvorsprünge 20 der umlaufenden Wand 19 des ersten Adapters 10 (siehe Fig. 10b). Der Federring 12 umgibt dabei den Verriegelungsteil 14, wobei die radial nach innen ragenden Vorsprünge 28 des Federrings 12 jeweils in eine der Aussparungen 18 hineinragen. Dadurch wird der Federring 12 drehfest mit dem ersten Adapter 10 verbunden.

Die zweite Befestigungsvorrichtung 3 umfasst einen zweiten Adapter 29 und eine Aheadkappe 30 (siehe Fig. 6a bis Fig. 6c), die mit einer Schraube 31 (siehe Fig. 1) an dem Vorbau 5 angeschraubt werden kann. Durch den zweiten Adapter 29 und die Aheadkappe 30 hindurch erstreckt sich eine Bohrung 32 für die Schraube 31.

Dabei sind der zweite Adapter 29 und die Aheadkappe 30 einstückig miteinander ausgebildet. Es besteht durchaus auch die Möglichkeit, dass der zweite Adapter 29 und die Aheadkappe 30 zwei separate miteinander verbundene Bauteile sind. Weiterhin kann die zweite Befestigungsvorrichtung 3 anstelle einer Aheadkappe 30 andere Mittel zur Befestigung an dem Fahrrad umfassen, wie beispielsweise mindestens eine Klammer oder mindestens einen Haltebügel oder mindestens eine Schlaufe oder dergleichen.

Der zweite Adapter 29 weist eine Adapterplatte 33 auf, an der ein von der Adapterplatte 33 wegragender Verbindungteil 34 angeordnet ist. Der Verbindungsteil 34 weist auf seiner von der Adapterplatte 33 abgewandten Seite einen quadratischen Querschnitt mit abgerundeten Ecken auf. Der Verbindungteil 34 weist eine Hinterschneidung 35 und auf seiner von der Adapterplatte 33 abgewandten Seite einen Rand 36 auf.

Auf der von der Aheadkappe 30 abgewandten Seite der Adapterplatte 33 sind vier Rippen 37 vorgesehen, die sich insbesondere von den Mitten der Seiten des Quadrats des Verbindungteils 34 radial nach außen erstrecken (siehe insbesondere Fig. 6c).

Zur Anbringung des Smartphones 2 an dem Fahrrad, insbesondere im abgebildeten Ausführungsbeispiel am Vorbau 5 des Fahrrads, werden die beiden Befestigungsvorrichtung 1, 3 miteinander verbunden. Dazu werden die beiden Adapter 10, 29 teilweise ineinandergeschoben und um eine Drehachse 38 relativ zueinander verdreht (siehe Fig. 11 und Fig. 12).

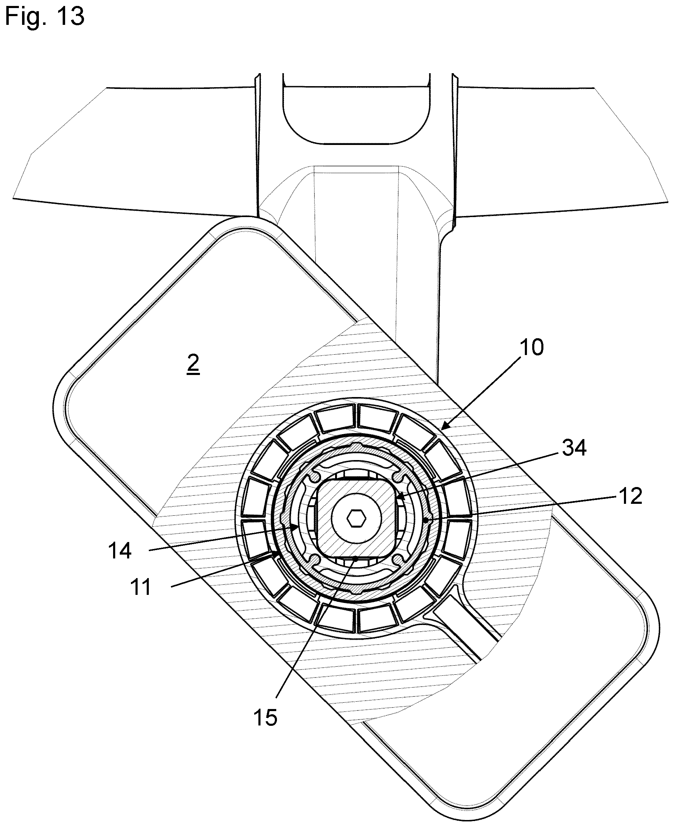

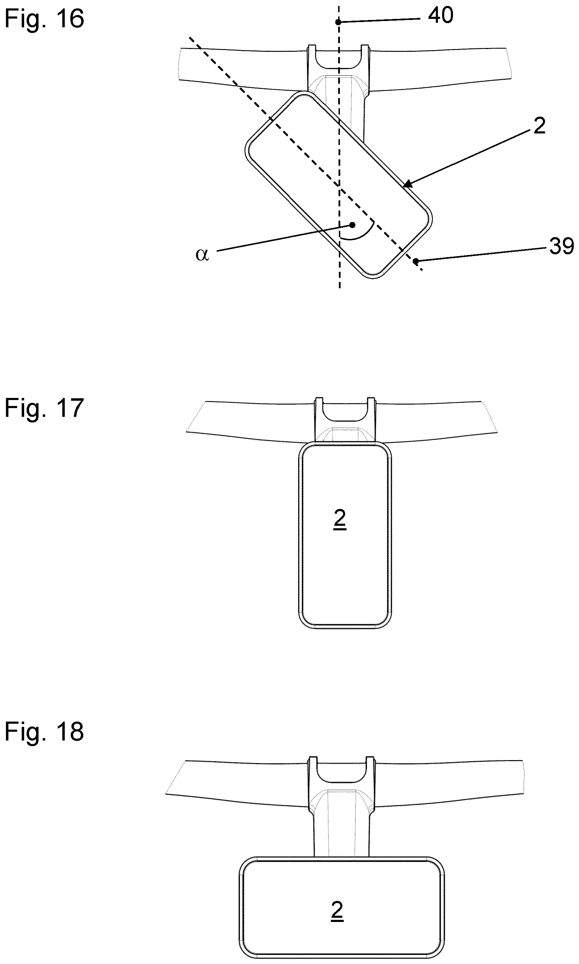

Der erste Adapter 10 wird in Fig. 11 in einer zu der Drehachse parallelen Richtung so auf den zweiten Adapter 29 zubewegt, dass der Verbindungsteil 34 des zweiten Adapters 29 in den Verriegelungsteil 14 des ersten Adapters 10 hineinbewegt wird. Dabei ist das Hineinbewegen des Verbindungsteils 34 in den Verriegelungsteil 14 in einer ersten Drehstellung der Adapter 10, 29 möglich, die in Fig. 13 abgebildet ist. **In** dieser ersten Drehstellung fluchtet der quadratische Querschnitt des Verbindungsteils 34 mit dem quadratischen Querschnitt der Öffnung 15 des Verriegelungsteils 14. **In** dieser ersten Drehstellung schließt die Längsrichtung 39 des Smartphones 2 einen Winkel α von 45° mit der Zweiradlängsrichtung 40 ein (siehe dazu die schematische Darstellung in Fig. 16).

In dem in den Verriegelungsteil 14 des ersten Adapters 10 hineinbewegten Zustand des Verbindungsteils 34 des zweiten Adapters 29 können die Adapter 10, 29 relativ zueinander verdreht werden. Um die Verdrehung zu ermöglichen, greifen bei dem Einschieben des Verbindungsteils 34 in den Verriegelungsteil 14 die auf der Adapterplatte 33 des zweiten Adapters 29 angeordneten Rippen 37 in die Nuten 26 auf der Oberseite des Mitnehmers 11 ein. Dadurch wird bei einer Drehbewegung des zweiten Adapters 29 relativ zu dem ersten Adapter 10 um die Drehachse 38 der Mitnehmer 11 relativ zu dem Verriegelungsteil 14 des ersten Adapters 10 um die Drehachse 38 gedreht.

Das Verdrehen des Mitnehmers 11 relativ zu dem Verriegelungsteil 14 und relativ zu dem drehfest mit dem Verriegelungsteil 14 verbundenen Federring 12 wird dadurch erreicht, dass der Federring 12 elastisch ist. Wenn der zweite Adapter 29 zusammen mit dem Mitnehmer 11 aus der ersten Drehposition herausbewegt werden soll, müssen die nach außen ragenden Vorsprünge des Federrings 12 gegen die Federkraft des Federrings 12 aus den Rastausnehmungen 24 des Mitnehmers 11 herausbewegt werden.

Bei dem abgebildeten Ausführungsbeispiel sind sechzehn Rastausnehmungen 24 des Mitnehmers 11 vorgesehen, die in gleichen Winkelabständen von jeweils 22,5° angeordnet sind. Daher gibt es 16 verschiedene Drehpositionen, in denen die nach außen ragenden Vorsprünge des Federrings 12 in die Rastausnehmungen 24 des Mitnehmers 11 rastend eingreifen. Wegen des sich drehfest mit dem Mitnehmer 11 bewegenden zweiten Adapters 29 verrasten also in diesen 16 Drehpositionen Teile der ersten und/oder der zweiten Befestigungsvorrichtung so miteinander, dass der erste Adapter nur gegen einen Widerstand aus einer entsprechenden Drehposition herausbewegbar ist.

Wegen der quadratischen Form des Querschnitts des Verbindungsteils 34 und des Querschnitts der Öffnung 15 des Verriegelungsteils 14 gibt es vier erste Drehpositionen, in denen der quadratische Querschnitt des Verbindungsteils 34 mit dem quadratischen Querschnitt der Öffnung 15 des Verriegelungsteils 14 fluchtet.

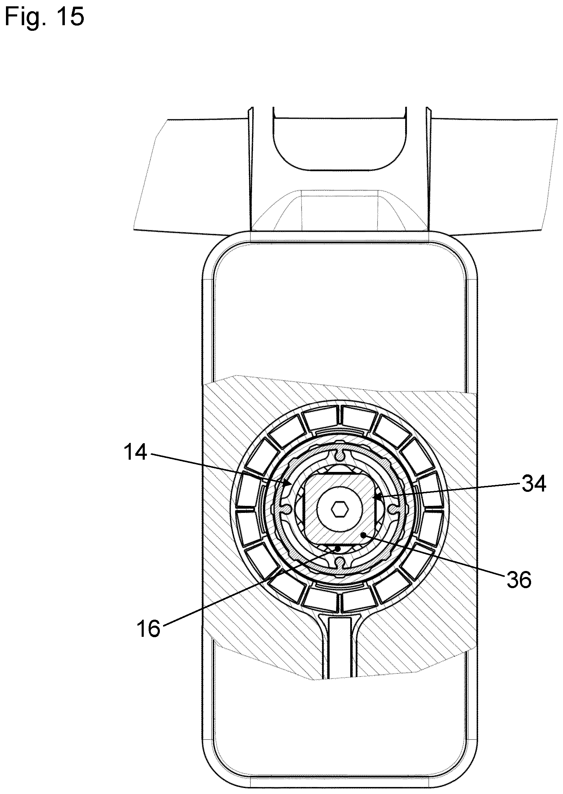

Es gibt weiterhin vier zweite Drehpositionen, in denen der quadratische Querschnitt des Verbindungsteils 34 mit dem quadratischen Querschnitt der Öffnung 15 des Verriegelungsteils 14 einen Winkel von 45° einschließt (siehe dazu Fig. 15). Jede der zweiten Drehpositionen weist zu der nächsten ersten Drehposition einen Winkel von 45° auf.

In dieser zweiten Drehposition greifen Abschnitte des oberen Randes 16 des Verriegelungsteils 14 in die Hinterschneidung 35 des Verbindungsteils 34 ein, wobei gleichzeitig die Ecken des oberen Randes 36 des Verbindungsteils 34 in die Hinterschneidung 17 des Verriegelungsteils 14 eingreifen. In dieser zweiten Drehposition können also die Adapter 10, 29 nicht in axialer Richtung beziehungsweise in einer Richtung parallel zur Drehachse 38 auseinandergezogen werden.

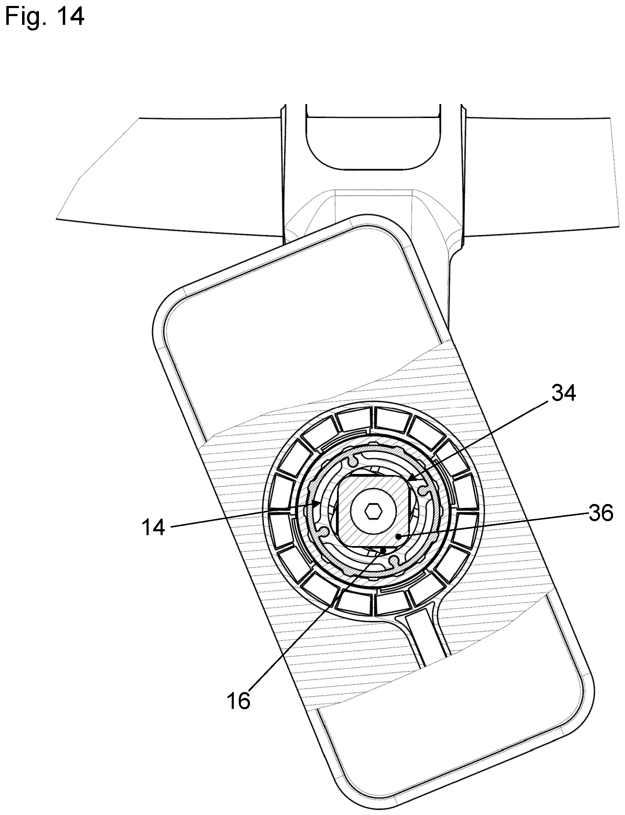

Es gibt weiterhin acht dritte Drehpositionen, in denen der quadratische Querschnitt des Verbindungsteils 34 mit dem quadratischen Querschnitt der Öffnung 15 des Verriegelungsteils 14 einen Winkel von 22,5° einschließt (siehe dazu Fig. 14). Jede der dritten Drehpositionen ist zwischen einer ersten und einer zweiten Drehposition beziehungsweise zwischen einer zweiten und einer ersten Drehposition angeordnet. Jede der dritten Drehpositionen weist zu der nächsten ersten Drehposition und zu der nächsten zweiten Drehposition einen Winkel von 22,5° auf.

Auch in der dritten Drehposition fluchtet der quadratische Querschnitt des Verbindungsteils 34 nicht mit dem quadratischen Querschnitt der Öffnung 15 des Verriegelungsteils 14, so dass auch in einer der dritten Drehpositionen die Adapter 10, 29 nicht in axialer Richtung beziehungsweise in einer Richtung parallel zur Drehachse 38 auseinandergezogen werden können.

Wenn also das Smartphone 2 wieder von dem Fahrrad demontiert werden soll, müssen die Adapter 10, 29 relativ zueinander in eine der ersten Drehpositionen verdreht werden. In jeder der ersten Drehpositionen können die Adapter 10, 29 in axialer Richtung beziehungsweise in einer Richtung parallel zur Drehachse 38 auseinandergezogen werden.

In dem in den Verriegelungsteil 14 des ersten Adapters 10 hineinbewegten Zustand des Verbindungsteils 34 des zweiten Adapters 29 können die Adapter 10, 29 sowohl im Uhrzeigersinn als auch im Gegenuhrzeigersinn relativ zueinander verdreht werden. Aus der in Fig. 16 abgebildeten ersten Drehposition kann also der erste Adapter 10 relativ zu dem zweiten Adapter 29 im Uhrzeigersinn in die zweite Drehposition gemäß Fig.17 bewegt werden. In dieser zweiten Drehposition erstreckt sich die Längsrichtung des Smartphones 2 in Zweiradlängsrichtung.

Alternativ kann der erste Adapter 10 relativ zu dem zweiten Adapter 29 aus der in Fig. 16 abgebildeten ersten Drehposition im Gegenuhrzeigersinn in die zweite Drehposition gemäß Fig.18 bewegt werden. In dieser zweiten Drehstellung erstreckt sich die Längsrichtung des Smartphones 2 in Zweiradquerrichtung.

### Bezugszeichenliste:

- 1: erste Befestigungsvorrichtung
- 2: Smartphone
- 3: zweite Befestigungsvorrichtung
- 4: Gabelschaft eines Fahrrads
- 5: Vorbau eines Fahrrads
- 6: Lenker eines Fahrrads
- 7: Smartphonehülle
- 8: Magnet
- 9: selbstklebende Folie
- 10: erster Adapter
- 11: ringförmiger Mitnehmer
- 12: Federring
- 13: Adapterplatte des ersten Adapters
- 14: Verriegelungsteil des ersten Adapters
- 15: Öffnung des Verriegelungsteils
- 16: Rand des Verriegelungsteils
- 17: Hinterschneidung des Verriegelungsteils
- 18: Aussparungen des Verriegelungsteils
- 19: kreisförmig umlaufende Wand des ersten Adapters
- 20: Rastvorsprünge des ersten Adapters
- 21: Grundplatte des Mitnehmers
- 22: Öffnung des Mitnehmers
- 23: umlaufender Rand des Mitnehmers
- 24: Rastausnehmungen des Mitnehmers
- 25: nach außen vorspringender Endabschnitt des Mitnehmers
- 26: Nut des Mitnehmers
- 27: nach außen ragender Vorsprung des Federrings
- 28: nach innen ragender Vorsprung des Federrings
- 29: zweiter Adapter
- 30: Aheadkappe
- 31: Schraube für die Anbringung der Aheadkappe
- 32: Bohrung für die Schraube
- 33: Adapterplatte des zweiten Adapters
- 34: Verbindungteil des zweiten Adapters
- 35: Hinterschneidung des Verbindungteils
- 36: Rand des Verbindungteils
- 37: Rippe des zweiten Adapters
- 38: Drehachse
- 39: Längsrichtung des Smartphones
- 40: Zweiradlängsrichtung
- α: Winkel zwischen der Längsrichtung des Smartphones und der Zweiradlängsrichtung

## Patentansprüche

1. Haltevorrichtung für die Anbringung eines mobilen Endgeräts, wie beispielsweise eines Smartphones (2), an einem Zweirad, umfassend eine erste Befestigungsvorrichtung (1) zur Befestigung des mobilen Endgeräts an der Haltevorrichtung und eine zweite Befestigungsvorrichtung (3) zur Befestigung der Haltevorrichtung an dem Zweirad, wobei die erste Befestigungsvorrichtung einen ersten Adapter (10) und die zweite Befestigungsvorrichtung einen zweiten Adapter (29) aufweist, wobei der erste Adapter (10) mit dem zweiten Adapter (29) für die Anbringung des mobilen Endgeräts an dem Zweirad verbindbar ist, wobei die Haltevorrichtung dazu eingerichtet ist, dass die Adapter (10, 29) für die Verbindung der Adapter (10, 29) aus mindestens einer ersten Drehposition in mindestens eine zweite Drehposition relativ zueinander um eine Drehachse (38) verdreht werden, wobei sich die Haltevorrichtung in der mindestens einen ersten Drehposition der Adapter (10, 29) in einem Freigabezustand befindet, in dem die Adapter (10, 29) durch eine lineare Bewegung voneinander lösbar sind, und wobei sich die Haltevorrichtung in der mindestens einen zweiten Drehposition der Adapter (10, 29) in einem Verriegelungszustand befindet, in dem die Adapter (10, 29) nicht durch eine lineare Bewegung voneinander lösbar sind, wobei die Haltevorrichtung dazu eingerichtet ist, dass zwischen der mindestens einen ersten Drehposition und der mindestens einen zweiten Drehposition mindestens eine dritte Drehposition vorgesehen ist, in der Teile der ersten und/oder der zweiten Befestigungsvorrichtung (1, 3) miteinander verrasten, so dass der erste Adapter (10) nur gegen einen Widerstand aus der mindestens einen dritten Drehposition relativ zu dem zweiten Adapter (29) in die mindestens eine erste und/oder in die mindestens eine zweite Drehposition überführbar ist, **dadurch gekennzeichnet, dass** der zweite Adapter (29) eine Adapterplatte (33) aufweist, an der ein von der Adapterplatte (33) in der axialen Richtung wegragendes Verbindungteil (34) angeordnet ist, der eine Hinterschneidung (35) aufweist.

2. Haltevorrichtung nach Anspruch 1, **dadurch gekennzeichnet, dass** die Haltevorrichtung dazu eingerichtet ist, dass der erste und der zweite Adapter (10, 29) durch Drehung relativ zueinander in mindestens zwei zweite Drehpositionen überführt werden können, die einen Winkel von 90° miteinander einschließen, und dass die Haltevorrichtung dazu eingerichtet ist, dass der erste Adapter (10) relativ zu dem zweiten Adapter (29) sowohl im Uhrzeigersinn als auch im Gegenuhrzeigersinn von der mindestens einen ersten Drehposition in mindestens eine zweite Drehposition überführt werden kann und/oder dass der erste Adapter (10) relativ zu dem zweiten Adapter (29) sowohl im Uhrzeigersinn als auch im Gegenuhrzeigersinn von einer zweiten Drehposition in mindestens eine erste Drehposition überführt werden kann.

3. Haltevorrichtung nach einem der Ansprüche 1 oder 2, **dadurch gekennzeichnet, dass** die Haltevorrichtung dazu eingerichtet ist, dass für die Verbindung der Adapter (10, 29) miteinander der zweite Adapter (29) in einer zu der Drehachse (38) parallelen axialen Richtung zumindest abschnittsweise in den ersten Adapter (10) eingebracht wird und in dem zumindest teilweise in den ersten Adapter (10) eingebrachten Zustand durch Drehung um die Drehachse (38) von der mindestens einen ersten Drehposition in die mindestens eine zweite Drehposition relativ zu dem ersten Adapter (10) überführt wird, wobei in dem Freigabezustand die Adapter (10, 29) in der axialen Richtung relativ zueinander bewegbar sind und wobei in dem Verriegelungszustand die Adapter (10, 29) nicht in der axialen Richtung relativ zueinander bewegbar sind.

4. Haltevorrichtung nach einem der Ansprüche 1 bis 3, **dadurch gekennzeichnet, dass** die Haltevorrichtung dazu eingerichtet ist, dass der erste und der zweite Adapter (10, 29) durch Drehung relativ zueinander in mehrere erste Drehpositionen und in mehrere zweite Drehpositionen überführt werden können, wobei eine jede der ersten Drehpositionen zwischen zwei zweiten Drehpositionen und eine jede der zweiten Drehpositionen zwischen zwei ersten Drehposition angeordnet sind, wobei sich die Haltevorrichtung in jeder der ersten Drehpositionen der Adapter (10, 29) in einem Freigabezustand befindet und in jeder der zweiten Drehposition der Adapter (10, 29) in einem Verriegelungszustand befindet.

5. Haltevorrichtung nach Anspruch 4, **dadurch gekennzeichnet, dass** die Haltevorrichtung vier erste Drehpositionen und vier zweite Drehpositionen aufweist, wobei jeweils der Drehwinkelabstand zwischen zwei benachbarten ersten Drehpositionen 90° beträgt und wobei jeweils der Drehwinkelabstand zwischen zwei benachbarten zweiten Drehpositionen 90° beträgt.

6. Haltevorrichtung nach einem der Ansprüche 1 bis 5, **dadurch gekennzeichnet, dass** der Drehwinkelabstand zwischen der mindestens einen ersten Drehposition und der mindestens einen zweiten Drehposition, insbesondere einer der benachbarten zweiten Drehpositionen, 45° beträgt.

7. Haltevorrichtung nach einem der Ansprüche 1 bis 6, **dadurch gekennzeichnet, dass** in der mindestens einen ersten Drehposition und/oder in der mindestens einen zweiten Drehposition Teile der ersten und/oder der zweiten Befestigungsvorrichtung (1, 3) so miteinander verrasten, dass der erste Adapter (10) nur gegen einen Widerstand aus der mindestens einen ersten Drehposition relativ zu dem zweiten Adapter (29) in die mindestens eine zweite Drehposition überführbar ist oder dass der erste Adapter (10) nur gegen einen Widerstand aus der mindestens einen zweiten Drehposition relativ zu dem zweiten Adapter (29) in die mindestens eine erste Drehposition überführbar ist.

8. Haltevorrichtung nach einem der Ansprüche 1 bis 7, **dadurch gekennzeichnet, dass** die Haltevorrichtung acht dritte Drehpositionen aufweist, die jeweils zwischen einer ersten Drehposition und einer zweiten Drehposition angeordnet sind, insbesondere wobei der Drehwinkelabstand zwischen einer jeden der dritten Drehpositionen und der benachbarten ersten Drehposition 22,5° beträgt und/oder der Drehwinkelabstand zwischen einer jeden der dritten Drehpositionen und der benachbarten zweiten Drehposition 22,5° beträgt.

9. Haltevorrichtung nach einem der Ansprüche 1 bis 8, **dadurch gekennzeichnet, dass** der Verbindungsteil (34) auf seiner von der Adapterplatte (33) abgewandten Seite einen im Wesentlichen quadratischen Querschnitt aufweist.

10. Haltevorrichtung nach einem der Ansprüche 1 bis 9, **dadurch gekennzeichnet, dass** der erste Adapter (10) eine Adapterplatte (13) aufweist, an der ein von der Adapterplatte (13) in der axialen Richtung wegragendes Verriegelungsteil (14) angeordnet ist, der eine Öffnung (15) für die Aufnahme des Verbindungteils (34) des zweiten Adapters (29) und eine Hinterschneidung (17) aufweist, insbesondere wobei die Öffnung (15) einen im Wesentlichen quadratischen Querschnitt aufweist.

11. Haltevorrichtung nach Anspruch 10, **dadurch gekennzeichnet, dass** der Verbindungsteil (34) auf seiner von der Adapterplatte (33) abgewandten Seite einen Rand (36) aufweist, der in der zweiten Drehposition der Adapter (10, 29) in die Hinterschneidung (17) des Verriegelungsteils (14) eingreift.

12. Haltevorrichtung nach einem der Ansprüche 10 oder 11,
**dadurch gekennzeichnet, dass** die erste Befestigungsvorrichtung (1) einen ringförmigen Mitnehmer (11) aufweist, der dazu eingerichtet ist, so an dem ersten Adapter (10) angebracht zu werden, dass er den Verriegelungsteil (14) umgibt und relativ zu diesem um die Drehachse (38) drehbar ist, insbesondere wobei der Mitnehmer (11) mit dem ersten Adapter (10) verclipst ist.

13. Haltevorrichtung nach Anspruch 12, **dadurch gekennzeichnet, dass** der ringförmigen Mitnehmer (11) im an dem ersten Adapter (10) angebrachten Zustand auf seiner von der Adapterplatte (13) abgewandten Seite Mittel zur Verdrehsicherung, wie beispielsweise Nuten (26) oder Rippen, aufweist, die dazu eingerichtet sind, so mit an dem zweiten Adapter (29) angebrachten Mitteln zur Verdrehsicherung, wie beispielsweise Rippen (37) oder Nuten, zusammenzuwirken, dass sich bei einer Relativdrehung der beiden Adapter (10, 29) der Mitnehmer (11) zusammen mit dem zweiten Adapter (29) relativ zu dem ersten Adapter (10) dreht.

14. Haltevorrichtung nach einem der Ansprüche 12 oder 13,
**dadurch gekennzeichnet, dass** die erste Befestigungsvorrichtung (1) einen Federring (12) aufweist, der dazu eingerichtet ist, so an dem ersten Adapter (10) angebracht zu werden, dass er zwischen einem Teil des Mitnehmers (11) und dem Verriegelungsteil (14) angeordnet ist und relativ zu dem Verriegelungsteil (14) drehfest ist.

15. Haltevorrichtung nach Anspruch 14, **dadurch gekennzeichnet, dass** der Mitnehmer (11) auf einer dem Federring (12) zugewandten Innenseite eine Mehrzahl von Rastausnehmungen (24) aufweist und dass der Federring (12) eine Mehrzahl von radial nach außen ragenden Vorsprüngen (27) aufweist, wobei die Haltevorrichtung dazu eingerichtet ist, dass in der mindestens einen ersten und/oder in der mindestens einen zweiten und/oder in der mindestens einen dritten Drehposition der Adapter (10, 29) die Vorsprünge (27) des Federrings (12) in die Rastausnehmungen (24) eingreifen, wobei für ein Überführen aus einer der Drehpositionen in eine andere der Drehpositionen die Vorsprünge (27) gegen die Federkraft des Federrings (12) aus den Rastausnehmungen (24) herausbewegt werden.

## Claims

1. Holding device for attaching a mobile terminal, such as a smartphone (2), to a bicycle, comprising a first fastening device (1) for fastening the mobile terminal to the holding device and a second fastening device (3) for fastening the holding device to the bicycle, wherein the first fastening device has a first adapter (10) and the second fastening device has a second adapter (29), wherein the first adapter (10) can be connected to the second adapter (29) for attaching the mobile terminal to the bicycle, wherein the holding device is configured such that, for connecting the adapters (10, 29), the adapters (10, 29) are rotated relative to one another about an axis of rotation (38) from at least one first rotational position into at least one second rotational position, wherein, in the at least one first rotational position of the adapters (10, 29), the holding device is in a released state in which the adapters (10, 29) can be separated from one another by a linear movement, and wherein, in the at least one second rotational position of the adapters (10, 29), the holding device is in a locked state, in which the adapters (10, 29) cannot be separated from one another by a linear movement, wherein the holding device is configured such that, between the at least one first rotational position and the at least one second rotational position, at least one third rotational position is provided, in which parts of the first and/or the second fastening device (1, 3) interlock with one another, so that the first adapter (10) can only be moved against a resistance from the at least one third rotational position relative to the second adapter (29) into the at least one first and/or the at least one second rotational position, **characterized in that** the second adapter (29) has an adapter plate (33) on which a connecting part (34) projecting away from the adapter plate (33) in the axial direction is arranged, which connecting part has an undercut (35).

2. Holding device according to claim 1, **characterized in that** the holding device is configured such that the first and second adapters (10, 29) can be moved, by rotation relative to one another, into at least two second rotational positions which form an angle of 90° with one another, and **in that** the holding device is configured such that the first adapter (10) can be moved relative to the second adapter (29) both clockwise and anticlockwise from the at least one first rotational position into at least one second rotational position, and/or **in that** the first adapter (10) can be moved relative to the second adapter (29) both clockwise and anticlockwise from a second rotational position into at least one first rotational position.

3. Holding device according to any one of claims 1 or 2, **characterized in that** the holding device is configured such that, for connecting the adapters (10, 29) to one another, the second adapter (29) is inserted, at least in some sections, into the first adapter (10) in an axial direction parallel to the axis of rotation (38), and in the state in which it is at least partially inserted into the first adapter (10) is moved by rotation about the axis of rotation (38) from the at least one first rotational position into the at least one second rotational position relative to the first adapter (10), wherein, in the released state, the adapters (10, 29) are movable relative to one another in the axial direction, and wherein, in the locked state, the adapters (10, 29) are not movable relative to one another in the axial direction.

4. Holding device according to any one of claims 1 to 3, **characterized in that** the holding device is configured such that the first and second adapters (10, 29) can be moved, by rotation relative to one another, into a plurality of first rotational positions and into a plurality of second rotational positions, wherein each of the first rotational positions is arranged between two second rotational positions and each of the second rotational positions is arranged between two first rotational positions, wherein the holding device is in a released state in each of the first rotational positions of the adapters (10, 29) and is in a locked state in each of the second rotational positions of the adapters (10, 29).

5. Holding device according to claim 4, **characterized in that** the holding device has four first rotational positions and four second rotational positions, wherein the angular distance between any two adjacent first rotational positions is 90° and wherein the angular distance between any two adjacent second rotational positions is 90°.

6. Holding device according to any one of claims 1 to 5, **characterized in that** the angular distance between the at least one first rotational position and the at least one second rotational position, in particular one of the adjacent second rotational positions, is 45°.

7. Holding device according to any one of claims 1 to 6, **characterized in that**, in the at least one first rotational position and/or in the at least one second rotational position, parts of the first and/or second fastening device(s) (1, 3) engage with one another in such a way that the first adapter (10) can only be moved against a resistance from the at least one first rotational position relative to the second adapter (29) into the at least one second rotational position, or **in that** the first adapter (10) can only be moved against a resistance from the at least one second rotational position relative to the second adapter (29) into the at least one first rotational position.

8. Holding device according to any one of claims 1 to 7, **characterized in that** the holding device has eight third rotational positions, each of which is arranged between a first rotational position and a second rotational position, in particular wherein the angular distance between each of the third rotational positions and the adjacent first rotational position is 22.5° and/or the angular distance between each of the third rotational positions and the adjacent second rotational position is 22.5°.

9. Holding device according to any one of claims 1 to 8, **characterized in that** the connecting part (34) has a substantially square cross-section on its side facing away from the adapter plate (33).

10. Holding device according to any one of claims 1 to 9, **characterized in that** the first adapter (10) has an adapter plate (13) on which a locking part (14) is arranged, which projects away from the adapter plate (13) in the axial direction, which locking part has an opening (15) for receiving the connecting part (34) of the second adapter (29) and an undercut (17), in particular wherein the opening (15) has a substantially square cross-section.

11. Holding device according to claim 10, **characterized in that** the connecting part (34) has, on its side facing away from the adapter plate (33), an edge (36) which, in the second rotational position of the adapters (10, 29), engages with the undercut (17) of the locking part (14).

12. Holding device according to any one of claims 10 or 11, **characterized in that** the first fastening device (1) has an annular driver (11), which is configured to be mounted on the first adapter (10) in such a way that it surrounds the locking part (14) and is rotatable relative thereto about the axis of rotation (38), in particular wherein the driver (11) is clipped to the first adapter (10).

13. Holding device according to claim 12, **characterized in that**, when mounted on the first adapter (10), the annular driver (11) has, on its side facing away from the adapter plate (13), anti-rotation means, such as, for example, grooves (26) or ribs, which are configured to cooperate with anti-rotation means, such as ribs (37) or grooves, attached to the second adapter (29), such that, on a relative rotation of the two adapters (10, 29), the driver (11) rotates together with the second adapter (29) relative to the first adapter (10).

14. Holding device according to any one of claims 12 or 13, **characterized in that** the first fastening device (1) has a spring washer (12), which is configured to be mounted on the first adapter (10) in such a way that it is arranged between a part of the driver (11) and the locking part (14) and is non-rotatable relative to the locking part (14).

15. Holding device according to claim 14, **characterized in that** the driver (11) has a plurality of detent recesses (24) on an inner side facing the spring washer (12), and **in that** the spring washer (12) has a plurality of radially outwardly protruding projections (27), wherein the holding device is configured such that, in the at least one first and/or in the at least one second and/or in the at least one third rotational position of the adapters (10, 29) the projections (27) of the spring washer (12) engage in the detent recesses (24), wherein for moving from one rotational position to another rotational position, the projections (27) are moved out of the detent recesses (24) against the spring force of the spring washer (12).

## Revendications

1. Dispositif de retenue pour le montage d'un terminal mobile, par exemple un smartphone (2), sur un deux-roues, comprenant un premier dispositif de fixation (1) pour la fixation du terminal mobile sur le dispositif de retenue et un second dispositif de fixation (3) pour la fixation du dispositif de retenue sur le deux-roues, dans lequel le premier dispositif de fixation présente un premier adaptateur (10) et le second dispositif de fixation présente un second adaptateur (29), dans lequel le premier adaptateur (10) peut être relié au second adaptateur (29) pour le montage du terminal mobile sur le deux-roues, dans lequel le dispositif de retenue est conçu afin que les adaptateurs (10, 29) soient tournés l'un par rapport à l'autre autour d'un axe de rotation (38) à partir d'au moins une première position de rotation dans au moins une seconde position de rotation pour la liaison des adaptateurs (10, 29), dans lequel le dispositif de retenue se trouve dans l'au moins une première position de rotation des adaptateurs (10, 29) dans un état de libération dans lequel les adaptateurs (10, 29) peuvent être détachés l'un de l'autre par un mouvement linéaire, et dans lequel le dispositif de retenue se trouve dans l'au moins une deuxième position de rotation des adaptateurs (10, 29) dans un état de verrouillage dans lequel les adaptateurs (10, 29) ne peuvent pas être détachés l'un de l'autre par un mouvement linéaire, dans lequel le dispositif de retenue est conçu afin qu'au moins une troisième position de rotation soit prévue entre l'au moins une première position de rotation et l'au moins une deuxième position de rotation, troisième position dans laquelle des parties du premier et/ou du second dispositif de fixation (1, 3) s'encliquètent les unes avec les autres de sorte que le premier adaptateur (10) puisse être déplacé uniquement contre une résistance de l'au moins une troisième position de rotation par rapport au second adaptateur (29) dans l'au moins une première et/ou dans l'au moins une deuxième position de rotation, **caractérisé en ce que** le second adaptateur (29) présente une plaque d'adaptateur (33) sur laquelle une partie de liaison (34) dépassant de la plaque d'adaptateur (33) dans le sens axial est agencée, laquelle partie présente une contre-dépouille (35).

2. Dispositif de retenue selon la revendication 1, **caractérisé en ce que** le dispositif de retenue est conçu afin que le premier et le second adaptateur (10, 29) puissent être déplacés par rotation l'un par rapport à l'autre dans au moins deux deuxièmes positions de rotation qui forment un angle de 90° l'une avec l'autre, et **en ce que** le dispositif de retenue est conçu afin que le premier adaptateur (10) puisse être déplacé par rapport au second adaptateur (29) non seulement dans le sens horaire mais aussi dans le sens antihoraire de l'au moins une première position de rotation dans au moins une seconde position de rotation et/ou **en ce que** le premier adaptateur (10) puisse être déplacé par rapport au second adaptateur (29) non seulement dans le sens horaire mais aussi dans le sens antihoraire d'une deuxième position de rotation dans au moins une première position de rotation.

3. Dispositif de retenue selon l'une quelconque des revendications 1 ou 2, **caractérisé en ce que** le dispositif de retenue est conçu afin que pour la liaison des adaptateurs (10, 29) l'un avec l'autre, le second adaptateur (29) soit introduit au moins par sections dans le premier adaptateur (10) dans un sens axial parallèle à l'axe de rotation (38) et soit déplacé dans l'état au moins partiellement introduit dans le premier adaptateur (10) par rotation autour de l'axe de rotation (38) de l'au moins une première position de rotation dans l'au moins une deuxième position de rotation par rapport au premier adaptateur (10), dans lequel dans l'état de libération, les adaptateurs (10, 29) sont mobiles l'un par rapport à l'autre dans le sens axial et dans lequel dans l'état de verrouillage, les adaptateurs (10, 29) ne sont pas mobiles l'un par rapport à l'autre dans le sens axial.

4. Dispositif de retenue selon l'une quelconque des revendications 1 à 3, **caractérisé en ce que** le dispositif de retenue est conçu afin que le premier et le second adaptateur (10, 29) puissent être déplacés par rotation l'un par rapport à l'autre dans plusieurs premières positions de rotation et dans plusieurs deuxièmes positions de rotation, dans lequel chacune des premières positions de rotation est agencée entre deux deuxièmes positions de rotation et chacune des deuxièmes positions de rotation est agencée entre deux premières positions de rotation, dans lequel le dispositif de retenue se trouve dans un état de libération dans chacune des premières positions de rotation des adaptateurs (10, 29) et se trouve dans un état de verrouillage dans chacune de la deuxième position de rotation des adaptateurs (10, 29).

5. Dispositif de retenue selon la revendication 4, **caractérisé en ce que** le dispositif de retenue présente quatre premières positions de rotation et quatre deuxièmes positions de rotation, dans lequel respectivement la distance d'angle de rotation entre deux premières positions de rotation contiguës s'élève à 90° et dans lequel respectivement la distance d'angle de rotation entre deux deuxièmes positions de rotation contiguës s'élève à 90°.

6. Dispositif de retenue selon l'une quelconque des revendications 1 à 5, **caractérisé en ce que** la distance d'angle de rotation entre l'au moins une première position de rotation et l'au moins une deuxième position de rotation, en particulier une des deuxièmes positions de rotation contiguës, s'élève à 45°.

7. Dispositif de retenue selon l'une quelconque des revendications 1 à 6, **caractérisé en ce que** dans l'au moins une première position de rotation et/ou dans l'au moins une deuxième position de rotation, des parties du premier et/ou du second dispositif de fixation (1, 3) s'encliquètent entre elles de sorte que le premier adaptateur (10) puisse être déplacé uniquement contre une résistance à partir de l'au moins une première position de rotation par rapport au second adaptateur (29) dans l'au moins une deuxième position de rotation ou **en ce que** le premier adaptateur (10) puisse être déplacé uniquement contre une résistance à partir de l'au moins une deuxième position de rotation par rapport au second adaptateur (29) dans l'au moins une première position de rotation.

8. Dispositif de retenue selon l'une quelconque des revendications 1 à 7, **caractérisé en ce que** le dispositif de retenue présente huit troisièmes positions de rotation qui sont agencées respectivement entre une première position de rotation et une deuxième position de rotation, en particulier dans lequel la distance d'angle de rotation entre chacune des troisièmes positions de rotation et la première position de rotation contiguë s'élève à 22,5° et/ou la distance d'angle de rotation entre chacune des troisièmes positions de rotation et la deuxième position de rotation contiguë s'élève à 22,5°.

9. Dispositif de retenue selon l'une quelconque des revendications 1 à 8, **caractérisé en ce que** la partie de liaison (34) présente une section transversale sensiblement carrée sur son côté éloigné de la plaque d'adaptateur (33).

10. Dispositif de retenue selon l'une quelconque des revendications 1 à 9, **caractérisé en ce que** le premier adaptateur (10) présente une plaque d'adaptateur (13) au niveau de laquelle une partie de verrouillage (14) dépassant de la plaque d'adaptateur (13) dans le sens axial est agencée, laquelle partie présente une ouverture (15) pour la réception de la partie de liaison (34) du second adaptateur (29) et une contre-dépouille (17), en particulier dans lequel l'ouverture (15) présente une section transversale sensiblement carrée.

11. Dispositif de retenue selon la revendication 10, **caractérisé en ce que** la partie de liaison (34) présente sur son côté éloigné de la plaque d'adaptateur (33) un bord (36) qui s'engage dans la deuxième position de rotation des adaptateurs (10, 29) dans la contre-dépouille (17) de la partie de verrouillage (14).

12. Dispositif de retenue selon l'une quelconque des revendications 10 ou 11, **caractérisé en ce que** le premier dispositif de fixation (1) présente un élément d'entraînement annulaire (11) qui est conçu afin d'être monté au niveau du premier adaptateur (10) de sorte qu'il entoure la partie de verrouillage (14) et puisse être tourné par rapport à celle-ci autour de l'axe de rotation (38), en particulier dans lequel l'élément d'entraînement (11) est clipsé avec le premier adaptateur (10).

13. Dispositif de retenue selon la revendication 12, **caractérisé en ce que** l'élément d'entraînement annulaire (11) présente dans l'état monté des moyens destinés à la sécurité anti-rotation au niveau du premier adaptateur (10) sur son côté éloigné de la plaque d'adaptateur (13), tels que des rainures (26) ou nervures qui sont conçues afin de coopérer avec des moyens destinés à la sécurité anti-rotation montés au niveau du second adaptateur (29), tels que des nervures (37) ou des rainures, de sorte que lors d'une rotation relative des deux adaptateurs (10, 29), l'élément d'entraînement (11) tourne conjointement avec le second adaptateur (29) par rapport au premier adaptateur (10).

14. Dispositif de retenue selon l'une quelconque des revendications 12 ou 13, **caractérisé en ce que** le premier dispositif de fixation (1) présente un anneau élastique (12) qui est conçu afin d'être monté au niveau du premier adaptateur (10) de sorte qu'il soit agencé entre une partie de l'élément d'entraînement (11) et la partie de verrouillage (14) et puisse être tourné par rapport à la partie de verrouillage (14).

15. Dispositif de retenue selon la revendication 14, **caractérisé en ce que** l'élément d'entraînement (11) présente une pluralité d'évidements d'encliquetage (24) sur un côté intérieur tourné vers l'anneau élastique (12) et **en ce que** l'anneau élastique (12) présente une pluralité de saillies (27) dépassant radialement vers l'extérieur, dans lequel le dispositif de retenue est conçu afin que les saillies (27) de l'anneau élastique (12) s'engagent dans les évidements d'encliquetage (24) dans l'au moins une première et/ou dans l'au moins une deuxième et/ou dans l'au moins une troisième position de rotation des adaptateurs (10, 29), dans lequel les saillies (27) sont déplacées contre la force de ressort de l'anneau élastique (12) hors des évidements d'encliquetage (24) pour le passage d'une des positions de rotation dans une autre des positions de rotation.
